Europäisches Patentamt

European Patent Office

Office européen des brevets

(19)

(11) **EP 1 655 836 A1**

(12) **DEMANDE DE BREVET EUROPEEN**

(43) Date de publication:
  **10.05.2006 Bulletin 2006/19**

(51) Int Cl.:
  *H03G 3/32* (2006.01)      *H04M 9/08* (2006.01)

(21) Numéro de dépôt: **05292282.0**

(22) Date de dépôt: **27.10.2005**

(84) Etats contractants désignés:
  **AT BE BG CH CY CZ DE DK EE ES FI FR GB GR
  HU IE IS IT LI LT LU LV MC NL PL PT RO SE SI
  SK TR**
  Etats d'extension désignés:
  **AL BA HR MK YU**

(30) Priorité: **04.11.2004  FR 0411761**

(71) Demandeur: **FRANCE TELECOM
  75015 Paris (FR)**

(72) Inventeurs:
  • **Le Tourneur, Grégoire
    22700 St. Quay-Perros (FR)**
  • **Deleam, David
    22700 Perros Guirec (FR)**

(74) Mandataire: **Fréchède, Michel et al
  Cabinet Plasseraud
  65/67, rue de la Victoire
  F-75440 Paris Cedex 09 (FR)**

(54) **Dispositif et procédé de traitement de signaux audio utilisant l'annulation d'écho**

(57)  Ce dispositif de traitement de signaux audio pour équipement de télécommunication comprend des moyens de contrôle automatique de gain (18) agissant sur le niveau d'un signal audio reçu (Sr) par amplification et affaiblissement du signal en fonction du niveau du signal reçu, et des moyens d'annulation d'écho (22).

Les moyens de contrôle automatique de gain comportent des moyens d'amplification (19-b) et des moyens d'affaiblissement (19-a) pour amplifier et affaiblir de manière séparée le signal reçu en aval et en amont des moyens d'annulation d'écho, en considérant le sens de propagation du signal reçu.

# FIG.3

**Description**

L'invention se rapporte au traitement numérique de signaux audio et concerne, plus particulièrement, l'annulation d'écho et le contrôle automatique de gain dans des postes de télécommunication.

Une application particulièrement intéressante d'un tel dispositif et d'un tel procédé concerne l'annulation de l'écho électrique ou acoustique et le contrôle automatique de gain dans un poste de télécommunication ou dans un système, fonctionnant selon le protocole Internet, pourvu d'une passerelle vers un réseau téléphonique commuté. L'invention peut toutefois également s'appliquer à l'annulation de l'écho électrique ou acoustique et au contrôle automatique de gain dans un poste offrant une fonction mains libres, en particulier dans un poste de télécommunications de type mobile.

En effet, l'écho électrique, issu des transformateurs de ligne deux fils/quatre fils du poste distant, qui sert à traiter les signaux incidents pour les rendre compatibles avec la ligne téléphonique, perturbe les communications en envoyant sur la ligne une partie des signaux reçus par le poste distant. De même, dans le cas d'un poste téléphonique, un écho acoustique apparaît lorsque le signal émis par le haut-parleur, qui correspond à un signal énoncé par le locuteur distant, est capté par le microphone.

Ces échos se traduisent alors, pour l'utilisateur, par la restitution du signal, au niveau de l'écouteur, avec un décalage par rapport à l'instant d'émission. Un tel décalage devient relativement gênant à partir du moment où le retard dans la chaîne devient important, c'est-à-dire par exemple supérieur à 50 ms. La réduction, voire l'annulation de l'écho, est généralement obtenue en équipant les postes de dispositifs annulateurs d'écho AEC (« Acoustic Echo Canceler ») ou EEC (« Electrical Echo Canceler »). Par ailleurs, l'accès à un service ou, de manière générale, l'établissement d'une communication avec un équipement distant, peut se faire de différents moyens, c'est-à-dire en utilisant le protocole IP, en utilisant un réseau téléphonique commuté, un réseau GSM, ... Ces modes d'accès peuvent engendrer des variations de niveau dans le signal délivré au niveau de l'écouteur. Cette variation de niveau peut également être due à l'éloignement ou au rapprochement du locuteur par rapport au microphone, ainsi qu'à la naturelle variété de puissance de parole entre individus. Or, le système de prise de son a une dynamique finie liée à la présence d'un convertisseur analogique-numérique au sein du système de traitement numérique équipant le poste. Il est donc nécessaire de maintenir dans une certaine plage les signaux reçus des locuteurs distants.

A cet effet, les dispositifs de traitement de signaux audio utilisent classiquement un dispositif de contrôle automatique de gain ou CAG pour maintenir constant le niveau du signal de sortie sur une plage d'utilisation prédéterminée. Le contrôle automatique de gain est basé sur l'utilisation de l'énergie des signaux et, par comparaison avec des seuils, met en oeuvre, soit une stratégie d'amplification, soit une stratégie d'affaiblissement du signal.

De tels dispositifs fonctionnent de manière relativement efficace. Ils posent néanmoins des problèmes majeurs lorsqu'ils sont utilisés conjointement avec un annulateur d'écho acoustique ou électrique. En effet, les moyens de contrôle automatique de gain peuvent être disposés soit en amont, soit en aval des moyens d'annulation d'écho, en considérant le trajet du signal reçu.

D'une manière générale, lorsque les moyens de contrôle automatique de gain sont disposés en amont des moyens d'annulation d'écho, il est très difficile de différencier à coup sûr l'écho du signal distant. Dans ce cas, le fonctionnement peut être perturbé selon les ordres de grandeur des signaux dans le système.

Bien que, dans ce cas, en ce qui concerne l'écho électrique, les moyens de contrôle automatique de gain soient susceptibles de diminuer l'écho si celui-ci est important, en particulier dans le cas d'une ligne non adaptée, « ouverte » ou en « court-circuit », ou si le signal distant est supérieur au seuil maximum de moyen de contrôle automatique de gain, ils présentent un certain nombre d'inconvénients. En effet, les moyens de contrôle automatique de gain sont pilotés à la fois par le signal reçu en provenance d'un équipement distant et par l'écho. Ils peuvent alors être perturbés par la prise en compte du signal d'écho. En outre, il existe un risque d'affaiblir le signal provenant de l'équipement distant si l'écho est fort ou, au contraire, d'amplifier l'écho si ce signal est faible. Il existe également un risque d'amplifier l'écho si celui-ci est faible. Enfin, les moyens de contrôle automatique de gain, qui intègrent, par nature, une fonction non linéaire, perturbent le fonctionnement de l'annulateur d'écho qui est généralement constitué par un filtre adaptatif.

Lorsque les moyens de contrôle automatique de gain sont disposés en aval des moyens d'annulation d'écho, le signal d'écho n'est plus en mesure de perturber le contrôle automatique de gain, dans la mesure où le signal provenant de l'équipement distant est essentiellement pris en compte. En outre, il ne perturbe pas l'annulateur d'écho dans la mesure où la non-linéarité se situe en aval. Cependant, les moyens de contrôle automatique de gain sont alors perturbés par les traitements mis en oeuvre au sein de l'annulateur d'écho, qui introduisent également une non-linéarité. En outre, les moyens de contrôle automatique de gain ne sont plus en mesure d'affaiblir l'écho.

Au vu de ce qui précède, le but de l'invention est de fournir un dispositif de traitement numérique d'un signal audio, dans lequel il est possible de combiner au sein d'un même équipement des moyens de contrôle automatique de gain et des moyens d'annulation d'écho en supprimant les inconvénients liés à la présence de l'un de ces moyens d'annulation d'écho et de contrôle automatique de gain dans le fonctionnement de l'autre moyen.

Selon l'invention, il est donc proposé un dispositif de traitement de signaux audio pour équipement de télécommunication, comprenant des moyens de contrôle automatique de gain agissant sur le niveau d'un signal audio reçu par amplification et affaiblissement du signal en fonction du niveau du signal reçu et des moyens d'annulation d'écho.

Selon une caractéristique générale de l'invention, les moyens de contrôle automatique de gain comportent des moyens d'amplification et des moyens d'affaiblissement adaptés pour amplifier et affaiblir de manière séparée le signal reçu en aval et en amont des moyens d'annulation d'écho, en considérant le sens de propagation du signal reçu.

De préférence, les moyens pour amplifier et les moyens pour affaiblir le signal reçu, agissent respectivement en aval et en amont des moyens d'annulation d'écho.

Selon une autre caractéristique de l'invention, les moyens de contrôle automatique de gain comportent des moyens de calcul d'un coefficient d'amplification ou d'affaiblissement global en fonction du niveau du signal reçu, destinés à constituer respectivement un coefficient d'amplification pour les moyens d'amplification ou un coefficient d'affaiblissement pour les moyens d'affaiblissement, de sorte que le produit des coefficients appliqués respectivement aux moyens d'amplification et aux moyens d'affaiblissement soit égal au coefficient global.

Dans ce cas, dans un mode de réalisation en particulier, les moyens d'amplification et les moyens d'affaiblissement comportent chacun un multiplicateur placé respectivement en aval et en amont des moyens d'annulation d'écho et reçoivent en entrée le coefficient d'amplification et le coefficient d'affaiblissement, respectivement.

Avantageusement, le dispositif comporte en outre des moyens pour atténuer le signal émis par l'équipement de télécommunications d'un niveau correspondant à l'affaiblissement engendré dans le signal reçu par les moyens d'affaiblissement.

Par exemple, les moyens d'annulation d'écho comportent des moyens d'estimation de l'écho et des moyens pour soustraire l'écho estimé du signal reçu.

L'invention a également pour objet un poste de télécommunication, caractérisé en ce qu'il comporte un dispositif de traitement de signaux audio tel que défini ci-dessus.

Selon encore un autre objet, l'invention concerne un procédé de traitement d'un signal audio pour équipement de télécommunication par contrôle automatique du gain d'un signal audio reçu, par amplification ou affaiblissement du signal en fonction du niveau du signal reçu et annulation de l'écho, caractérisé en ce que l'on affaiblit et l'on amplifie le signal de manière séparée avant et après l'annulation de l'écho.

Dans un mode de mise en oeuvre avantageux, on affaiblit et l'on amplifie le signal respectivement avant et après l'annulation d'écho.

Dans un mode de mise en oeuvre de ce procédé, on affaiblit en outre le niveau d'un signal audio émis par l'équipement de télécommunications d'un niveau correspondant au niveau d'affaiblissement du signal avant annulation de l'écho.

D'autres buts, caractéristiques et avantages de l'invention apparaîtront à la lecture de la description suivante, donnée uniquement à titre d'exemple non limitatif, et faite en référence aux dessins annexés, sur lesquels :

- la figure 1 illustre la structure d'un dispositif de traitement de signaux audio selon l'état de la technique, dans un premier mode de réalisation ;
- la figure 2 illustre un autre exemple de réalisation d'un dispositif de traitement de signaux audio connu, selon un deuxième mode de réalisation ; et
- la figure 3 illustre la réalisation d'un dispositif de traitement numérique d'un signal audio, conforme à l'invention.

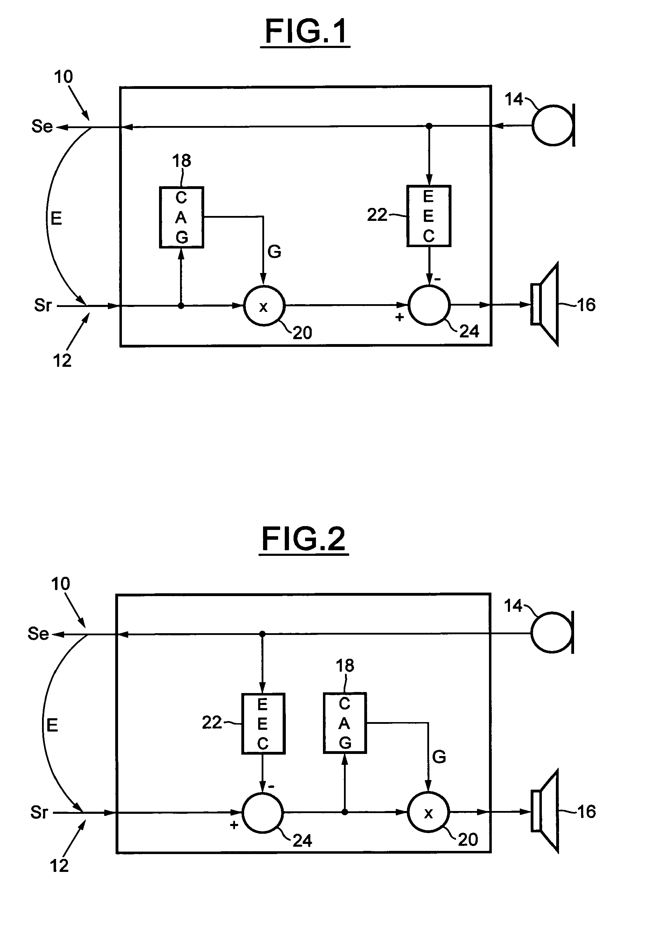

Sur la figure 1, on a représenté un exemple d'un dispositif de traitement numérique d'un signal audio selon l'état de la technique, pourvu de moyens de contrôle automatique de gain et de moyens d'annulation d'écho, et pour lequel la fonction de transfert des moyens de contrôle automatique de gain et la fonction de transfert des moyens d'annulation d'écho sont bien connus.

Comme on le voit sur cette figure, ce dispositif comporte une chaîne d'acquisition de sons 10 et une chaîne de restitution de sons 12, comprenant respectivement un microphone 14 associé à un convertisseur analogique numérique (non représenté) et un haut-parleur 16 associé à un convertisseur numérique analogique CNA (non représenté).

En ce qui concerne le traitement numérique des signaux, celui-ci est mis en oeuvre par un module de contrôle automatique de gain 18 pilotant un multiplicateur 20 auquel est délivré un coefficient de multiplication, de manière à affaiblir le niveau du signal reçu si ce dernier est trop élevé, et, réciproquement, amplifier ce signal si le niveau de celui-ci est trop faible pour maintenir constant le niveau du signal de sortie sur la plage d'utilisation du dispositif.

Par ailleurs, le traitement numérique des signaux met en oeuvre des moyens d'annulation d'écho 22 constitués par un filtre numérique assurant essentiellement un calcul de l'estimation de l'écho. Un soustracteur 24 soustrait l'écho estimé au signal reçu.

Dans l'exemple de réalisation décrit en référence à la figure 1, le module de contrôle automatique de gain, qui permet d'appliquer un coefficient d'amplification ou d'affaiblissement G au signal reçu, est placé en amont du module d'annulation d'écho.

Au contraire, dans le mode de réalisation illustré à la figure 2, le module de contrôle automatique de gain 18 est disposé en aval du module d'annulation d'écho 22.

Comme indiqué précédemment, ces deux modes de réalisation engendrent un certain nombre d'inconvénients majeurs liés, soit à la présence d'une fonction non linéaire en amont du module d'annulation d'écho, à un risque d'amplifier l'écho, ou au contraire d'affaiblir le signal provenant de l'équipement distant et à un pilotage du module du contrôle automatique de gain à la fois par le signal distant et par l'écho, soit à la présence, en amont du module de contrôle automatique de gain, d'une fonction non linéaire et à une impossibilité d'affaiblir l'écho, lorsque le module de contrôle automatique de gain est disposé en aval du module d'annulation d'écho.

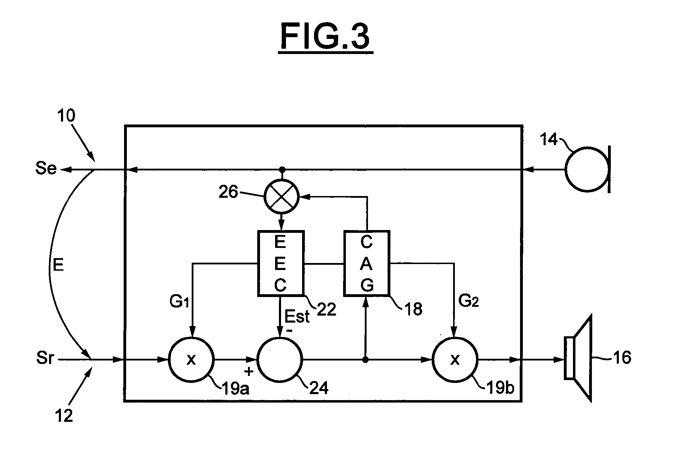

On a représenté sur la figure 3 l'architecture d'un dispositif de traitement de signaux audio pour équipement de télécommunication, permettant de pallier ces inconvénients.

Sur cette figure, les éléments identiques à ceux des figures 1 et 2 portent les mêmes références numériques.

On reconnaît donc, sur cette figure, la chaîne d'acquisition de sons 10 et la chaîne de restitution de sons 12, qui comprennent respectivement un microphone 14 associé à un convertisseur analogique-numérique CAN (non représenté) et un haut-parleur 16 associé à un convertisseur numérique-analogique CNA (non représenté). Le traitement numérique des signaux audio met en oeuvre un module de contrôle automatique de gain 18 et un module d'annulation d'écho 22. En fonction de l'application envisagée, le module d'annulation d'écho constitue, soit un module d'annulation d'écho électrique EEC, soit un module d'annulation d'écho acoustique AEC.

Le module de contrôle automatique de gain 18 assure les mesures de l'énergie du signal reçue $S_r$ en provenance d'un équipement distant et procède à une comparaison de l'énergie mesurée avec une valeur de seuil, afin d'amplifier ou au contraire affaiblir le signal $S_r$ en fonction de son niveau.

Le module d'annulation d'écho 22 est, quant à lui, constitué par un filtre numérique assurant un calcul de l'estimation de l'écho à partir d'un signal de référence constitué par le signal émis $S_e$ par le microphone 14. Les coefficients de ce filtre sont calculés de manière à minimiser l'erreur entre l'écho et l'estimation de l'écho. Ces coefficients sont calculés de manière récurrente à partir de coefficients préalablement calculés, de l'erreur « *erreur* » entre l'estimation de l'écho et l'écho, du signal de référence *ref* et d'un pas d'adaptation µ à partir de la relation suivante :

$$\text{Coefficient (n+1)} = \text{coefficient (n)} + \mu \text{ x } \textit{erreur} \text{ x } \textit{ref}$$

L'estimation de l'écho Est est alors soustraite au moyen d'un soustracteur 24 au signal reçu Sr.

Comme on le voit sur la figure 3, le module de contrôle automatique de gain 18 agit, soit en amont du module d'annulation d'écho, soit en aval de celui-ci en fonction du comportement à obtenir.

Le dispositif comporte en effet un premier multiplicateur 19a placé en amont du soustracteur 24, et donc, en amont du module d'annulation d'écho 22, et un deuxième multiplicateur 19-b placé en aval du soustracteur 24.

En fonctionnement, le module de contrôle automatique de gain 18 élabore, de manière connue en soi, un coefficient global G d'amplification ou d'affaiblissement du signal, par comparaison de l'énergie du signal reçu avec des seuils minimum et maximum correspondant, l'un à un affaiblissement du signal reçu, et l'autre à une amplification du signal reçu.

Si l'énergie du signal reçu est inférieure à la valeur de seuil minimale, le coefficient G correspond à un coefficient d'amplification du signal. Au contraire, si l'énergie du signal est supérieure à la valeur de seuil maximale, le coefficient d'amplification globale G correspond à un coefficient d'affaiblissement.

Aux multiplicateurs 19-a et 19-b, disposés respectivement en amont et en aval du soustracteur 24, sont appliqués respectivement un coefficient d'affaiblissement G1 et un coefficient d'amplification G2 du signal reçu. Ainsi, si le dispositif de contrôle automatique de gain doit amplifier le signal reçu, c'est-à-dire si le coefficient global G est supérieur à 1, alors G1 = 1 et G2 = G. Le coefficient G1 appliqué au premier multiplicateur 19-a est alors égal à la valeur unité et le coefficient G2 appliqué au deuxième multiplicateur 19-b vaut G. L'amplification est alors reportée après le module d'annulation d'écho 22. On évite alors tout risque d'amplifier l'écho.

Dans le cas où le module de contrôle automatique de gain 18 doit atténuer le signal reçu, c'est-à-dire si le coefficient global G est inférieur à 1, alors G1=G et G2=1.

Le coefficient G1 est alors égal au coefficient global G et le coefficient G2 vaut alors la valeur unité. L'atténuation est alors appliquée avant le module d'annulation d'écho 22, ce qui permet, en cas de besoin d'affaiblir l'écho.

Ainsi, comme on le conçoit, grâce à l'invention, selon laquelle le traitement mis en oeuvre par le module de contrôle automatique de gain est soit effectué en amont, soit en aval du traitement mis en oeuvre par le module d'annulation d'écho, permet de ne pas amplifier l'écho électrique ou acoustique en amont du module d'annulation d'écho, lorsque le module de contrôle automatique de gain doit amplifier le signal reçu, de diminuer l'écho quand le signal reçu est fort, en agissant alors en amont du module d'annulation d'écho et d'utiliser le signal reçu seul comme signal d'entrée du module de contrôle automatique de gain.

On conçoit alors que cet agencement permet de combiner les avantages des deux modes de réalisation de l'état de la technique sans en supporter les inconvénients majeurs.

On notera enfin que l'invention n'est pas limitée au mode de réalisation décrit.

En effet, comme représenté sur la figure 3, dans le but de résoudre les problèmes liés à l'utilisation conjointe d'un annulateur d'écho et d'un dispositif de contrôle automatique de gain, on atténue le signal d'entrée du module d'annulation d'écho, c'est à dire le signal émis $S_e$, d'une quantité correspondant à l'atténuation engendrée dans le signal reçu. Pour ce faire, on applique au moyen d'un multiplicateur 26 la fonction de transfert des moyens de contrôle automatique de gain à l'entrée du dispositif annulateur d'écho de manière qu'un signal provenant du microphone et que le signal reçu soient manipulés chacun par une fonction comprenant un même terme correspondant à la fonction de transfert des moyens de contrôle automatique de gain.

Comme on le conçoit, l'application de la fonction de transfert CAG en entrée du dispositif annulateur d'écho 29 permet d'obtenir, dans chacune des équations définissant l'écho et l'estimation de l'écho, un terme CAG factorisable.

En effet, la minimisation de l'erreur quadratique moyenne entre l'écho *Echo (t)* et l'estimation de l'écho *Estime (t)* revient à minimiser la quantité suivante :

$$\text{Erreur } (t) = \text{Echo } (t) - \text{Estime } (t)$$

Soit :

$$\text{Erreur } (t) = [\textit{Réf } (t) \times H(t)] \times \text{CAG}(t) - [\textit{Réf}(t) \times \text{CAG}(t)] \times H_{est}(t)$$

Dans laquelle

- H(t) désigne la fonction de transfert de l'écho entre le haut-parleur et le microphone ; et
- $H_{est}(t)$ désigne la fonction de transfert de l'estimation de l'écho.

Sous l'hypothèse de stationnarité du canal de transmission, le produit de convolution est associatif. La formule ci-dessus devient alors :

$$\text{Erreur } (t) \ \textit{Réf}(t) \times [H(t) - H_{est}(t)] \times \text{CAG}(t)$$

## Revendications

1. Dispositif de traitement de signaux audio pour équipement de télécommunication, comprenant des moyens de contrôle automatique de gain (18) agissant sur le niveau d'un signal audio reçu (Sr) par amplification et affaiblissement du signal en fonction du niveau du signal reçu et des moyens d'annulation d'écho (22), **caractérisé en ce que** les moyens de contrôle automatique de gain (18) comportent des moyens d'amplification (19-b) et des moyens d'affaiblissement (19-a) pour amplifier et affaiblir de manière séparée le signal reçu en aval et en amont des moyens d'annulation d'écho (22), en considérant le sens de propagation du signal reçu (Sr).

2. Dispositif selon la revendication 1, **caractérisé en ce que** les moyens d'amplification (19-b) et les moyens d'affaiblissement (19-a) agissent respectivement en aval et en amont des moyens d'annulation d'écho (22).

3. Dispositif selon l'une des revendications 1 et 2, **caractérisé en ce que** les moyens de contrôle automatique de gain (18) comportent des moyens de calcul d'un coefficient d'amplification ou d'affaiblissement global (G) en fonction du niveau du signal reçu, ce coefficient global étant destiné à constituer un coefficient d'amplification (G2) pour les moyens d'amplification ou un coefficient d'affaiblissement (G1) pour les moyens d'affaiblissement, de sorte que le produit des coefficients appliqués respectivement aux moyens d'amplification et aux moyens d'affaiblissement soit égal au coefficient global (G).

4. Dispositif selon la revendication 3, **caractérisé en ce que** les moyens d'amplification (G2) et les moyens d'affaiblissement (G1) comportent chacun un multiplicateur placé respectivement en aval et en amont des moyens d'annulation d'écho (22) et recevant en entrée le coefficient d'amplification et le coefficient d'affaiblissement, respectivement.

5. Dispositif selon l'une des revendications 3 et 4, **caractérisé en ce qu'**il comporte des moyens pour atténuer le signal émis d'un niveau correspondant à l'affaiblissement engendré dans le signal reçu par les moyens d'affaiblissement.

6. Dispositif selon l'une quelconque des revendications 1 à 5, **caractérisé en ce que** les moyens d'annulation d'écho comportent des moyens d'estimation de l'écho et des moyens pour soustraire l'écho estimé du signal reçu.

7. Poste de télécommunications, **caractérisé en ce qu'**il comporte un dispositif de traitement de signaux acoustiques selon l'une quelconque des revendications 1 à 6.

8. Procédé de traitement d'un signal audio pour équipement de télécommunication par contrôle automatique du gain d'un signal audio reçu par amplification ou affaiblissement du signal en fonction du niveau du signal reçu (Sr) et annulation de l'écho, **caractérisé en ce que** l'on affaiblit et l'on amplifie le signal de manière séparée avant et après l'annulation de l'écho.

9. Procédé selon la revendication 8, **caractérisé en ce que** l'on affaiblit et l'on amplifie le signal, respectivement avant et après l'annulation de l'écho.

10. Procédé selon l'une des revendications 8 et 9, **caractérisé en ce que** l'on affaiblit en outre le niveau d'un signal audio émis (Se) d'un niveau correspondant au niveau d'affaiblissement du signal avant annulation de l'écho.

## FIG.1

## FIG.2

# FIG.3

**Office européen des brevets**

**RAPPORT DE RECHERCHE EUROPEENNE**

Numéro de la demande

EP 05 29 2282

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2003/076948 A1 (NISHIMURA EIICHI) 24 avril 2003 (2003-04-24) * alinéa [0052] - alinéa [0055] * * alinéas [0012], [0014], [0035], [0047] * * alinéa [0002] * * abrégé; figures 2,3 * ----- | 1-10 | H03G3/32 H04M9/08 |
| X | US 5 644 635 A (ARMBRUSTER ET AL) 1 juillet 1997 (1997-07-01) * abrégé; figure 1 * * colonne 2, ligne 27 - ligne 33 * ----- | 1-10 | |

| | | | DOMAINES TECHNIQUES RECHERCHES (IPC) |
|---|---|---|---|
| | | | H03G H04M H04B |

Le présent rapport a été établi pour toutes les revendications

| Lieu de la recherche | Date d'achèvement de la recherche | Examinateur |
|---|---|---|
| Munich | 9 février 2006 | Wichert, B |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 05 29 2282

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-02-2006

| Document brevet cité au rapport de recherche | Date de publication | Membre(s) de la famille de brevet(s) | Date de publication |
|---|---|---|---|
| US 2003076948  A1 | 24-04-2003 | JP  2003134004 A | 09-05-2003 |
| US 5644635  A | 01-07-1997 | DE  4445877 A1<br>EP  0719027 A2<br>JP  8223089 A | 27-06-1996<br>26-06-1996<br>30-08-1996 |

EPO FORM P0460